Europäisches Patentamt

European Patent Office

Office européen des brevets

(11) Publication number: **0 271 777 B1**

# EUROPEAN PATENT SPECIFICATION

(45) Date of publication of patent specification: 27.03.91

(51) Int. Cl.⁵: **H02H 7/09**

(21) Application number: 87117881.0

(60) Publication number of the earlier application in accordance with Art.76 EPC: **0 130 547**

(22) Date of filing: 27.06.84

(54) **Voltage protective apparatus for variable-frequency power system.**

(30) Priority: 30.06.83 JP 120810/83
30.06.83 JP 120811/83

(43) Date of publication of application:
22.06.88 Bulletin 88/25

(45) Publication of the grant of the patent:
27.03.91 Bulletin 91/13

(84) Designated Contracting States:
CH DE GB LI

(56) References cited:
FR-A- 2 455 285
US-A- 3 546 534

SIEMENS REVIEW, vol. 43, no. 6, 1976, pages 257-259; A. FISCHER: "Overfluxing protection for transformers"

(73) Proprietor: MITSUBISHI DENKI KABUSHIKI KAISHA
2-3, Marunouchi 2-chome Chiyoda-ku
Tokyo 100(JP)

(72) Inventor: Takata, Nobuhara MITSUBISHI DE-
NKI KABUSHIKI KAISHA
Power And Ind. Sys. Ctr. 1-2, Wadasakicho
1-chome
Hyogo-ku Hyogo(JP)
Inventor: Hino, Sakio MITSUBISHI DENKI
KABUSHIKI KAISHA
Power And Ind. Sys. Ctr. 1-2, Wadasakicho
1-chome
Hyogo-ku Hyogo(JP)
Inventor: Ito, Makoto MITSUBISHI DENKI
KABUSHIKI KAISHA
Power And Ind. Sys. Ctr. 1-2, Wadasakicho
1-chome
Hyogo-ku Hyogo(JP)
Inventor: KAneko, Seiji MITSUBISHI DENKI
KABUSHIKI KAISHA
Power And Ind. Sys. Ctr. 1-2, Wadasakicho
1-chome
Hyogo-ku Hyogo(JP)

(74) Representative: Eisenführ, Speiser & Strasse
Martinistrasse 24
W-2800 Bremen 1(DE)

## Description

The present invention relates to a voltage protective apparatus for a variable-frequency electric power system.

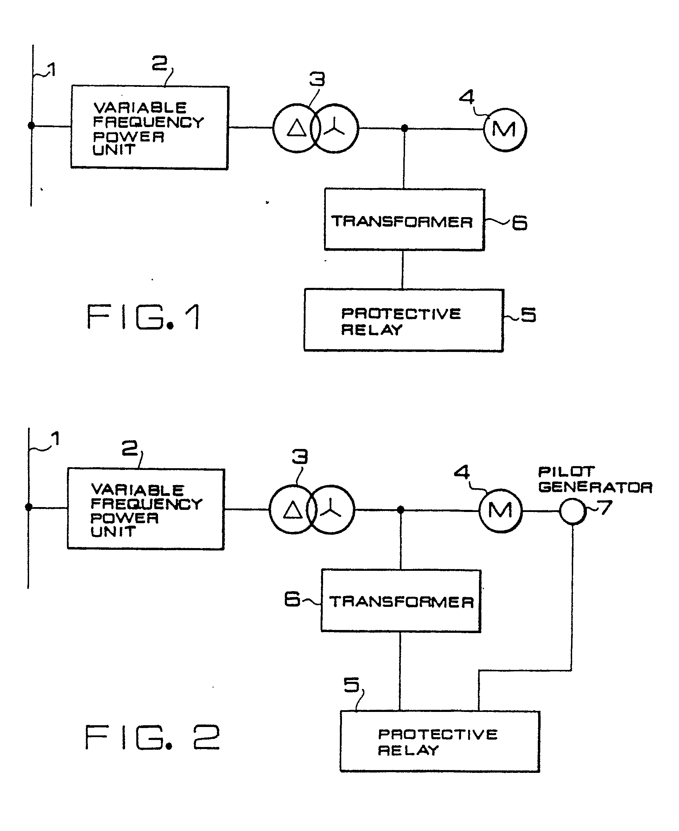

Fig. 1 is a block diagram of a conventional voltage protective apparatus, wherein there are shown an AC power supply line 1, a variable-frequency power unit 2, an output transformer 3, and an AC motor 4 which is a load in the power system. The secondary voltage of the output transformer 3 is detected and inputted to a protective relay (low-voltage or overvoltage relay) serving as a voltage detector. Also shown is an instrument transformer 6 for converting the secondary voltage of the output transformer 3 to a value suited for the protective relay 5.

The AC motor 3 receives via the output transformer 3 electric power from the AC power supply line 1 with its frequency controlled by the variable-frequency power unit 1, so that the AC motor 4 is rotated at a speed corresponding to the system frequency f inputted thereto. In order to prevent overheating of the AC motor 4 that may be induced by overexcitation during a low-frequency operation, the output of the variable-frequency power unit 2 is so controlled that the following relationship is maintained between the system voltage E and the system frequency f.

where fs:      commercial frequency

Vs:        normal operation voltage at commercial frequency.

$$E = f \times Vs/fs \qquad \qquad \ldots \ldots \; (1)$$

In detection of the interphase (or phase) voltage relative to the AC motor 4, first the interphase (or phase) voltage Vm obtained at the secondary winding of the instrument transformer 6 and expressed by Eq. (2) shown below is introduced to the protective relay 5 and, in case the voltage Vm is greater than a threshold value of the protective relay 5, a detection signal is outputted to indicate an abnormal voltage representing a fault in the power system.

$$Vm = f \cdot (Vs/fs) \cdot Ko \qquad \ldots \ldots \; (2)$$

where Ko: constant.

However, since the detection voltage Vm is affected as well as the system voltage E by the system frequency f, if any overvoltage (or low voltage) is generated in a low-frequency driving mode of the AC motor 4, the voltage detection (or fault detection in a normal state) is rendered impossible.

That is, the protective relay 5 is set at a detection sensitivity within a certain range selected on the basis of the detection voltage Vm obtained when the system frequency f is equal to the commercial frequency f and the system voltage E is equal to the normal operation voltage Vs.

It is presumed in the following description that a detection value is selected for an overvoltage of 120 to 140% and a low voltage of 80 to 70%.

When the sensitivity is so established as to detect an overvoltage of a low voltage at a frequency below the commercial frequency fs, the disadvantage existed that the detection voltage Vm comes to be smaller than Vs x 40% in case the system frequency is lower than fs x 40%, so that a low-voltage detection is executed even in a normal state while any overvoltage being as high as 120 to 140% of a normal value could not be detected.

From EP-A1-0 105 077, which has to be considered under Art. 54 (3) and (4) EPC, a protective apparatus for a variable voltage and variable frequency electric power system is known, in which the sensitivity of the protective apparatus is changed in response to the frequency of the power system.

It is an object of the present invention to provide a voltage protective apparatus capable of detecting any abnormal voltage in a variable-frequency power system with certainty even when the system is in a low-frequency operation mode, thereby enhancing the functional reliability in protection of the system.

According to the invention, a voltage protective apparatus is provided for a variable-frequency electric power system in which the voltage-to-frequency ratio is maintained at a predetermined constant value under normal conditions, comprising: a protective relay comparing a signal corresponding to an interphase or phase voltage of the system with a threshold value, and a voltage detector detecting the interphase or phase voltage of the system and producing an output signal proportional to the frequency of the power system, said output signal of the voltage detector being fed to an input of said protective relay for setting said threshold value.

Fig. 1 is a block diagram of a conventional voltage detecting apparatus for a variable-frequency power system;

Fig. 2 is a block diagram of another solution of a voltage detecting appartus for a variable-frequency power system; and

Figs. 3 is a block diagram of an embodiment of this invention.

Hereinafter an examplary embodiment of the present invention will be described with reference to the accompanying drawing.

In Fig. 2, a pilot generator 7 is coupled with the shaft of an AC motor 4 and produces an output es, which is proportional to the rotational speed of the motor 4 and is inputted to a protective relay 5 as a threshold set signal. The protective relay 5 is so connected that the detected secondary voltage Vm of an output transformer 3 is inputted thereto, and its threshold value is increased or decreased in proportion to the voltage es which is the threshold set signal. Since other components are equal to those shown previously in Fig. 1, they are represented by the same reference numerals.

In this arrangement where the output voltage es of the pilot generator 7 is altered in proportion to the system frequency f, the threshold value of the protective relay 5 always receiving the voltage es is not kept fixed but is increased or decreased in accordance with each change in the frequency. Therefore, upon occurrence of any fault in the power system, the protective relay 5 compares the input interphase (or phase) voltage with the threshold value proportional to the system frequency f in the abnormal state of the system. In an exemplary case where the relay sensitivity is so established as to detect a 130% (or 75%) voltage when the system frequency f is equal to a commercial frequency fs, if the frequency f at the occurrence of an abnormal voltage is fs × 40%, the threshold value is lowered to 40% so that a detection signal is outputted properly even at the abnormal system voltage.

The above circuit may be so modified that the output of the pilot generator 7 and the secondary voltage of the output transformer 3 fed to the protective relay 5 via the instrument transformer may be fed via input devices (not shown) respectively through signal level conversion.

In case the AC motor 4 is of induction type, the output es of the pilot generator 7 is not exactly proportional to the system frequency f. However, since the slip thereof is merely 5% or so, it is ignorable in practical use.

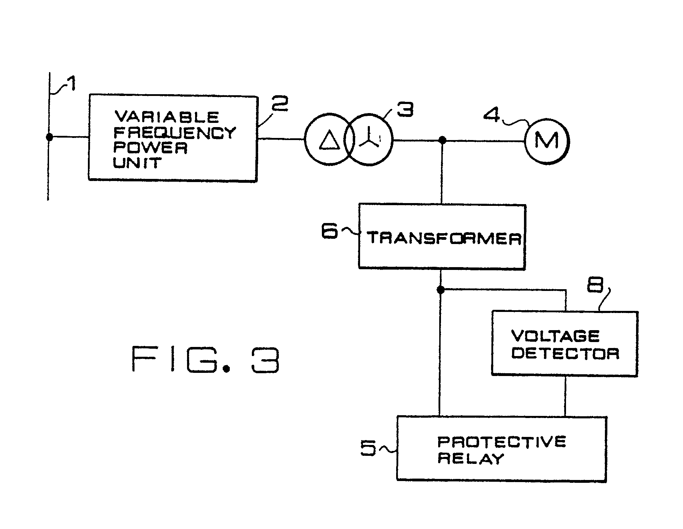

Although in the above circuit the output of the pilot generator 7 is applied as an input signal to the protective relay 5 for determining the threshold value thereof, a detector may be provided to detect some other physical quantity such as voltage, current or rotational speed proportional to the system frequency f, and the detected physical quantity may be used as the aforesaid input signal to determine the threshold value either directly or through signal level conversion. An example of such modification is shown in Fig. 3, an embodiment of the present invention.

In the block diagram of Fig. 3, an interphase (or phase) voltage in the system is introduced via an instrument transformer 6 to a voltage detector 8, whose output is then applied to a protective delay 5 through signal level conversion by an unshown input device so as to be suited to determine the threshold value of the relay 5. Since the voltage is proportional to the system frequency f, the effect attainable is equal to that in the foregoing embodiment of Fig. 2.

In addition to the example of Fig. 4 where the threshold set signal is inputted via the voltage detector 8, similar result is obtainable by processing in the protective relay 5 the input from the instrument transformer 6.

It is also obvious that the processing in the protective relay 5 may be in either an analog or digital mode.

The system load is not limited to an AC motor alone, and similar effect is attainable practically in any power system where the voltage-to-frequency ratio can be maintained constant under control.

As mentioned hereinabove, according to the present invention where the output of a physical quantity detector proportional to the system frequency is fed as a threshold set input to a protective relay which functions in response to an interphase (or phase) voltage or a voltage corresponding thereto, the threshold value of the protective relay is reduced with decrease of the system frequency, so that it becomes possible to ensure proper detection of any abnormal-voltage fault during a low-frequency operation mode of the power system, hence enhancing the functional reliability in protection of the system against any overvoltage (or low voltage).

**Claims**

1. A voltage protective apparatus for a variable-frequency electric power system (1-3) in which the voltage-to-frequency ratio is maintained at a predetermined constant value under normal conditions, comprising: a protective relay (5) comparing a signal corresponding to an interphase or phase voltage of the system with a threshold value, and a voltage detector (8) detecting the interphase or phase voltage of the sytem and producing an output signal proportional to the frequency of the power system, said output signal of the voltage detector (8) being fed to an input of said protective relay (5) for setting said threshold value.

**Revendications**

1. Dispositif protecteur sensible à la tension pour un système d'alimentation éléctrique à fréquence variable (1 à 3) dans lequel le rapport tension/fréquence est maintenu à une valeur prédéterminée constante dans des conditions normales, ce dispositif comprenant : un relais protecteur (5) qui compare, à une valeur de seuil, un signal correspondant à une tension de phase ou entre phases du systèm, et un détecteur de tension (8) qui détecte la tension de phase ou entre phases du système et engendre un signal de sortie proportionnel à la fréquence du système d'alimentation, ledit signal de sortie du détecteur de tension (8) étant appliqué à une entrée dudit relais protecteur (5) pour le réglage de ladite valeur de seuil.

**Ansprüche**

1. Spannungsschutzeinrichtung für ein Stromversorgungssystem mit variabler Frequenz (1-3), bei der das Spannungs-Frequenz-Verhältnis unter normalen Bedingungen auf einem vorbestimmten, konstanten Wert gehalten wird, gekennzeichnet durch ein Schutzrelais (5), welches ein von der Zwischenphasen- oder Phasen-Spannung des Systemes abgeleitetes Signal mit einem Schwellenwert vergleicht;
durch einen Spannungsdetektor (8), der die Zwischenphasen-oder Phasen-Spannung des Systemes erfaßt und ein zur Frequenz des Stromversorgungssystemes proportionales Ausgangssignal erzeugt;
durch das Zuführen des Ausgangssignales des Spannungsdetektors (8) zu einem Eingang des Schutzrelais (5) zum Setzen des Schwellenwertes.

FIG. 1

FIG. 2

FIG. 3